# EUROPEAN PATENT SPECIFICATION

(11) **EP 2 646 666 B1**
(45) Date of publication and mention of the grant of the patent: **09.01.2019**
(21) Application number: 11844469.4
(22) Date of filing: 24.11.2011
(51) Int. Cl.: F01N 13/18, F01N 3/021, F01N 3/28, F01N 3/00

(54) **INSERT, HOLDER AND POST-TREATMENT UNIT FOR EXHAUST GASES**
EINSATZ, HALTER UND NACHVERARBEITUNGSVORRICHTUNG FÜR ABGASE
INSERT, SUPPORT ET UNITÉ DE POST-TRAITEMENT POUR GAZ D'ÉCHAPPEMENT

(30) Priority: 03.12.2010 SE 1051281
(43) Date of publication of application: 09.10.2013
(73) Proprietor: Scania CV AB, 151 87 Södertälje (SE)
(72) Inventor: BUCKSCH, Ragnar, S-120 50 Årsta (SE); GRANQVIST, Göran, S-736 36 Kungsör (SE)
(74) Representative: Scania CV AB
(86) International application number: PCT/SE2011/051416
(87) International publication number: WO 2012/074459

(56) References cited:
- DE-A1- 3 439 891
- DE-A1- 10 357 953
- DE-B1- 2 220 921
- FR-A1- 2 191 938
- GB-A- 1 507 164
- JP-A- S5 828 506
- JP-A- S5 838 314
- JP-A- 2003 097 248
- US-A- 2 620 893
- US-A- 3 406 501
- US-A1- 2008 216 464

## Description

### TECHNICAL FIELD

The invention relates to an insert for a holder in a post-treatment unit for exhaust gases of a combustion engine, comprising a socket for a treatment component intended to have flowing through it the exhaust gases which are to be treated, connecting means for holding the insert in position in the holder, and sealing means for gastight closure of the socket relative to the holder. The invention relates also to a holder for such an insert and a post-treatment unit provided with such an insert.

### BACKGROUND

To meet increasingly stringent emission requirements, vehicle manufacturers have long resorted to exhaust post-treatment. This treatment is performed in various catalysts and filters which transform the exhaust gases chemically or physically so that only a small amount of the undesirable substances can escape from the exhaust pipe. In an insert of the kind indicated above the treatment component may be, for example, an oxidation catalyst, an SCR (selective catalytic reduction) catalyst or a wall flow filter. For substrates with coatings used in the filters and catalysts to perform their function, they often need to be extractable from the post-treatment unit/silencer for reconditioning, e.g. for cleaning, emptying of ash residues which cause large back-pressures and possibly for replacement of the treatment components. A known seal for such an insert comprises a so-called V-seal. After each extraction, such a seal needs to be replaced by a new seal, since it will have become plastically deformed and will no longer be tight enough when the insert is reconnected to the holder for the post-treatment unit to be able to meet the prevailing requirements with regard to exhaust emissions. Today's emission requirements often do not allow even an occasional percentage of the exhaust gases to leak past the inserts in the post-treatment unit.

US 2 620 893 A and DE 22 20 921 B1 disclose two different types of post-treatment units for exhaust gases of a combustion engine. US 2 620 893 A discloses a post-treatment unit in the form of a filter element adapted to be readily attached and detached from the end of an exhaust pipe. A flexible annular seal made of rubber or the like is arranged between a cap of the filter element and the exhaust pipe so seal off and to support the filter element. DE 22 20 921 B1 discloses an insert for a holder in a post-treatment unit for exhaust gases comprising a socket for a treatment component through which the exhaust gases which are to be treated flow. Connecting means are arranged to hold the holder in position and sealing means are arranged to seal off the socket relative to the holder.

The prior art can be improved to further prevent the exhaust gases to leak past the inserts in the post-treatment units.

### SUMMARY OF THE INVENTION

An object of the invention is to propose an inset of the kind indicated in the introduction which has an effective seal and is easy to remove and put back without needing to replace the seal.

This is achieved by the features indicated in the claims set out below.

According to a version of the invention, said sealing means comprises a sealing ring on the socket to cooperate in self-centering seat engagement with an opposite sealing ring in the holder. Such a sealing arrangement, which may in principle be regarded as working like a valve seat seal, has great sealing performance and can be reinserted many times. The annular embodiment also makes the seal flexurally elastic in the circumferential direction so that the, for example, conical self-centering forces the rings to tight linear abutment against one another when the insert is connected to the holder.

The sealing rings are made of hard material, e.g. metal, particularly steel, although ceramic material is also conceivable. The sealing rings may also be machined, e.g. turned or ground, to high surface fineness for optimum sealing performance. The surface fineness may be such that the closure becomes tight enough to meet prevailing emission requirements, e.g. the current Euro 6.

The sealing ring may also be located in respective corner recesses of the socket and the holder.

The connection to hold the insert in position in the holder may comprise a threaded connection. Such a connection, possibly verified by monitoring of tightening torque, is an easy way of achieving good and correct abutment force between the sealing rings.

The threaded connection may comprise an outside thread on the socket to engage with an inside thread on the holder. This makes it possible for the insert to be fitted in the holder in a single operation.

An outer end of the socket may also have a recess situated at a circumference for a tool to fasten and release the connection.

Other features and advantages of the invention may be indicated by the claims and the description set out below of embodiment examples.

### BRIEF DESCRIPTION OF DRAWINGS

FIG. 1 is a perspective view of an exhaust post-treatment unit which may be provided with an insert according to the invention;
FIG. 2 is a side view, partly in section, of an insert according to the invention sealingly connected to a holder for an exhaust post-treatment unit;
FIG. 3 is a side view of an insert according to the invention partly inserted in a holder of a schematically depicted exhaust post-treatment unit;
FIG. 4 is a cross-sectional view on a larger scale, with portions cut away, of a seal according to the invention between an insert and a holder of an exhaust post-treatment unit;
FIG. 5 is a perspective view in cross-section, with portions cut away, of a cover arrangement for an exhaust post-treatment unit;
FIG. 6 is a cross-sectional view on a larger scale, with portions cut away, of a closure region between a cover arrangement and an exhaust post-treatment unit;
FIG. 7 is a perspective view, with portions cut away, of a cover tightener for a cover arrangement; and
FIG. 8 depicts schematically an example of a cover tightener with an eccentric clamping means.

The same reference numbers are used throughout the drawings to denote items with the same or similar functions.

### DETAILED DESCRIPTION OF EMBODIMENT EXAMPLES

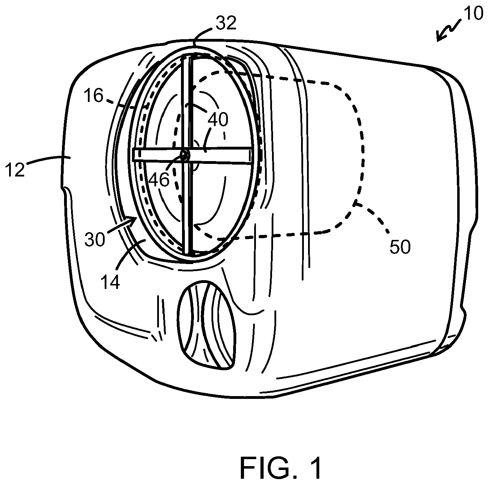

FIG. 1 depicts an exhaust post-treatment unit 10 for an undepicted combustion engine, e.g. a diesel engine of, for example, a freight vehicle. The post-treatment unit 10 comprises in a known way a housing 12 with inlet and outlet apertures not depicted in detail for the exhaust gases from the engine. The unit 10 may have one or more interchangeable inserts, e.g. the insert 50 represented by a broken line in FIG. 1, each comprising a treatment component containing a substrate arranged to have the exhaust gases flowing through it, e.g. an oxidation catalyst, an SCR catalyst or a wall flow filter.

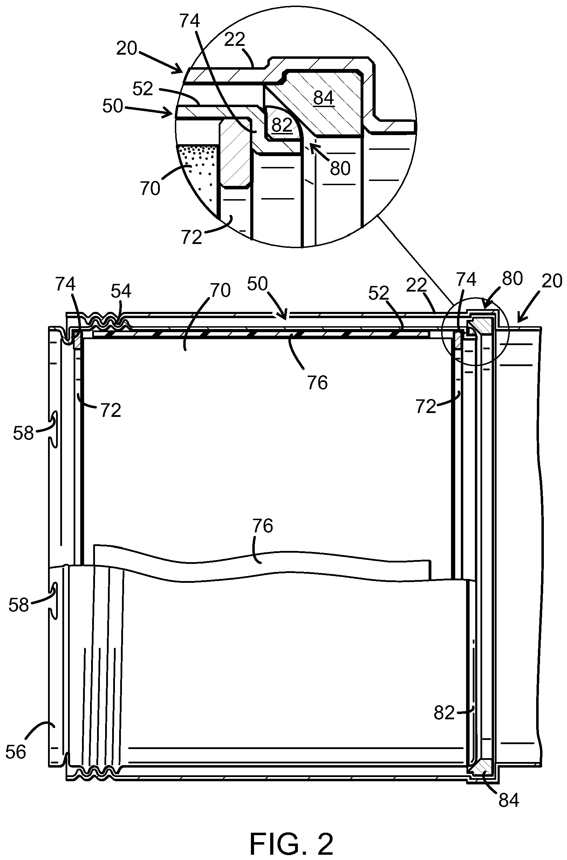

As illustrated in FIG. 2, the insert 50 has a thin-walled sleeve 52 or so-called "sleeving pipe", which is open at both ends and into which the substrate 70 is pushed and is then axially fixed by a pair of mutually opposite locking rings 72 which are themselves fixed by annular shoulders 74 formed at the mutually opposite ends of the sleeve 52. The substrate 70 may also have radial support in the form of an inner sleeve 76 made of a suitable, e.g. shock-absorbing or vibration-damping, material.

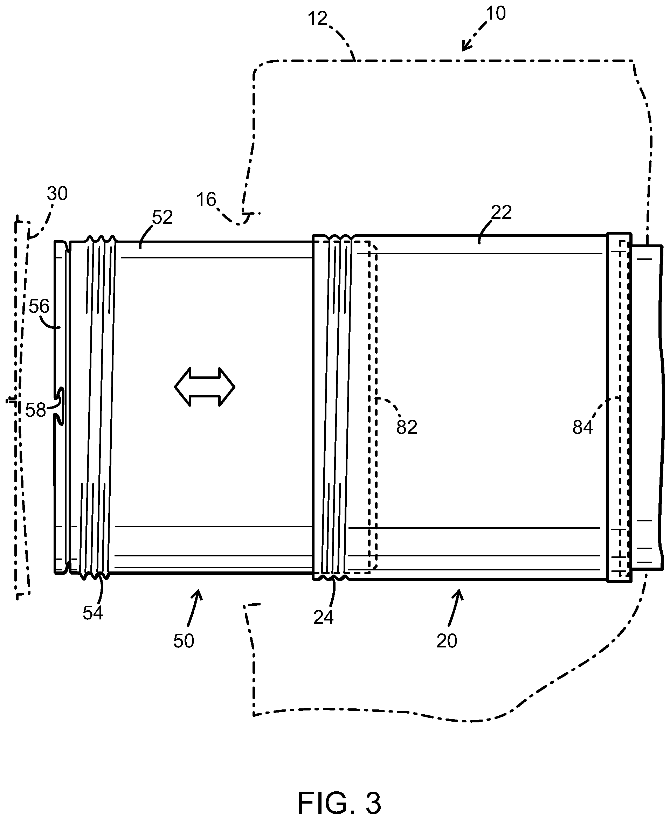

As partly schematically further depicted in FIG. 3, the insert 50 may be inserted in and removed from the post-treatment unit 10 through an aperture 16 with a cover 30 in the housing 12. More specifically, the insert 50 may be pushed into and pulled out from a holder 22 integrated in an exhaust duct 20 which in an undepicted way is welded in position in the housing 12. The other end of the sleeve 52 is further provided with an outside thread 54 for engagement with an inside thread 24 of the holder 22 so that the insert 50 can be firmly connected in the duct 20. An axial outer flange 56 at the outer edge of the sleeve 52 may further have a number of recesses 58 evenly distributed round the circumference to engage with an undepicted tool for pulling out and releasing the insert 50 in the holder 22 of the duct 20.

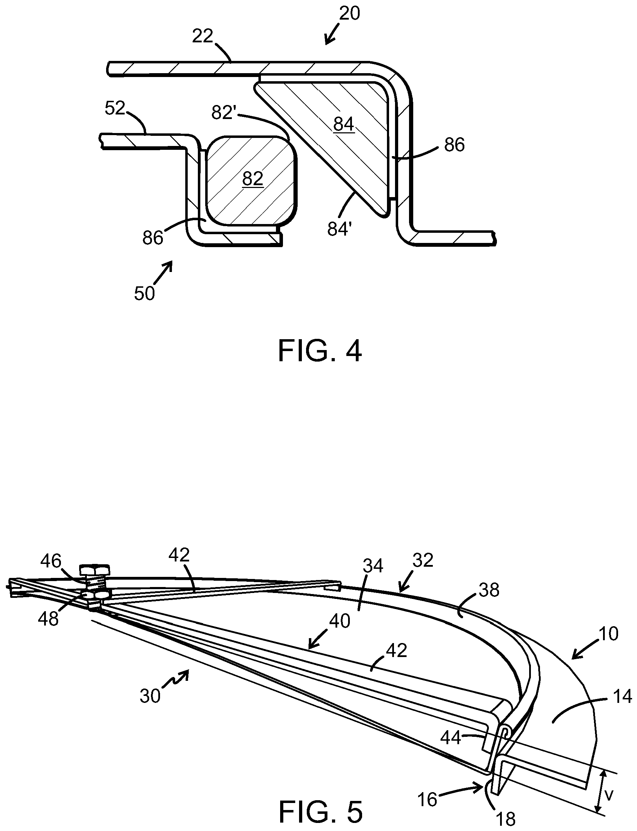

As most clearly illustrated in FIG. 2, there is an annular seal 80 between the inner end of the sleeve 52 and the holder 22. The annular seal 80 comprises a pair of sealing means in the form of sealing rings 82, 84 which cooperate by substantially linear contact and are made of a suitable grade of steel. As most clearly illustrated in FIG. 4, the sealing rings 82, 84 may be located in, for example, respective suitably shaped corner recesses of the sleeve 52 and the holder 22 and be connected in the recesses by suitable joints 86, e.g. welded or soldered joints or possibly some other tight form of joint such as binding agent capable of withstanding the high temperatures from the exhaust gases flowing past. The seal 80 is self-centering due to the fact that one, 84', of the sealing surfaces 82', 84' of the rings 82, 84 is conical, so that the seal 80 works in principle like a seat valve when the sleeve 52 of the insert 50 is screwed firmly into the holder 22 of the duct 20. The rings 82, 84 may of course also be of reverse configuration so that the conical surface is on the sealing ring 82 of the sleeve 52 (not depicted). The cooperating sealing surfaces 82', 84' are with advantage also machined, e.g. turned and where appropriate ground, to high surface fineness in order further to improve the sealing performance.

Reverting to FIG. 1, it also depicts an openable cover arrangement 30 for a circular access aperture 16 in a sheetmetal wall 14 of the silencer/post-treatment unit 10. As illustrated in more detail in FIG. 5, the arrangement 30 comprises a cover 32 with a cover tightener 40. The cover 32, like a lid for paint cans, is made of a piece of sheetmetal, e.g. sheet steel, with a covering cover disc 34 which has a curvature v, and a suitably slightly conical elastic sealing flange 38 intended to sealingly engage with an edge of the aperture 16 when the cover 30 is pressed into the aperture 16. In the example in FIG. 5, the edge of the aperture 16 is delineated by an inner flange 18 which may likewise, but need not necessarily, be slightly conical. The edge of the aperture 16 need not necessarily consist of a flange 18 but may possibly also be a circular inner edge with a possibly rounded cross-section (not depicted).

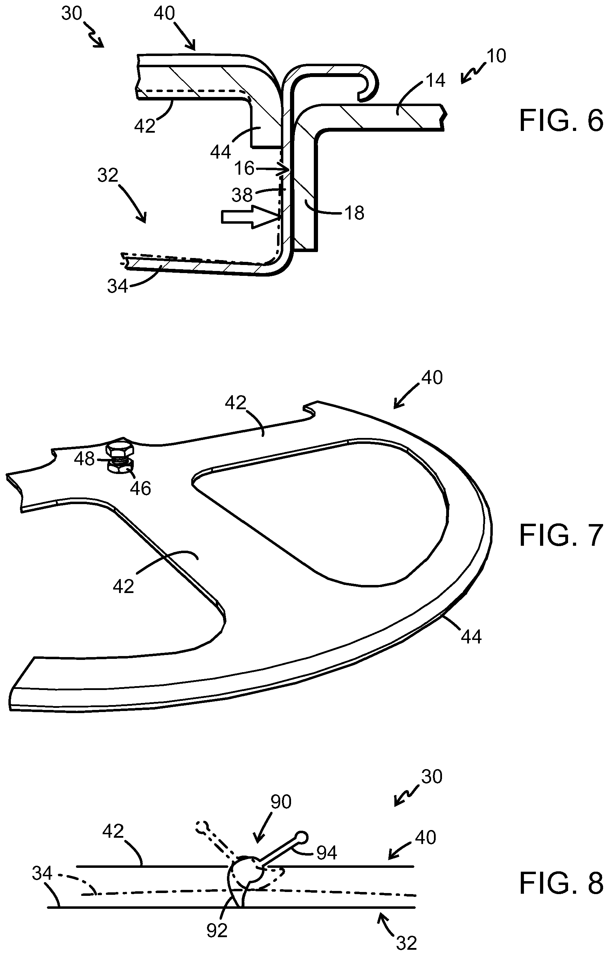

The cover tightener 40 can clamp the cover 32 in a fitted state as depicted in FIG. 6. In this example the lock tightener 40 has a supporting frame comprising a pair of mutually crossing supporting members or supporting arms 42 with diametrically opposite angled ends 44 which are firmly connected, e.g. welded or soldered, to the inside of the sealing flange 38. A clamping means in the form of a clamping screw 46 with a locknut 48 is threadedly connected to the supporting arms 42 in their crossing region. The free end of the screw 46 engages with the curved cover disc 34 so that when the screw 46 is tightened its free end presses against the central region of the cover disc 34 and reduces the curvature. When the arrangement 30 is placed in the aperture 16 of the post-treatment unit 10, approximately as depicted in FIG. 6, the sealing flange 38 will then be moved in the direction of the arrow from the position represented by chain-dotted lines to the position represented by continuous lines, so that it is further clamped sealingly against the edge/flange 18 of the aperture 16. As further depicted in FIG. 6, each supporting arm 42 may if necessary have, for example, a curved cross-section to prevent outward deflection of the supporting arm 42 when the clamping screw 46 is tightened.

Many variations of cover and cover tightener are possible. As depicted in FIG. 7, the cover tightener 40 may for example take the form of a supporting disc made of a piece of sheetmetal with recesses which delineate a suitable number of radial supporting arms or spokes 42. FIG. 8 depicts schematically a cover tightener 40 with a clamping means 90 comprising an eccentric element 92 supported pivotably in an aperture in the supporting frame 42 and manoeuvrable by means of a handle 94 to alter the curvature of the cover disc 34 between the respective states represented by chain-dotted and continuous lines.

It is also conceivable for the cover disc to curve in the opposite direction (i.e. inwards into the aperture) from that depicted in the drawing and for the clamping device then to exert tensile force instead of pressure on the cover disc (not depicted).

## Claims

1. An insert (50) for a holder (22) in a post-treatment unit (10) for exhaust gases of a combustion engine, comprising a socket (52) for a treatment component (70) intended to have flowing through it the exhaust gases which are to be treated, connecting means (54) for holding the insert (50) in position in the holder (22), and sealing means (80) for gastight closure of the socket (52) relative to the holder (22), **characterised in that** which sealing means (80) comprise a sealing ring (82) on the socket (52) for cooperation in self-centering seat engagement with an opposite sealing ring (84) in the holder (22), the sealing ring (82) is located in a corner recess of the socket (52) and cooperate by substantially linear contact with the opposite sealing ring (84) in the holder (22) and that the connecting means comprise a threaded connection (24, 54) comprising an outside thread (54) on the socket (52) for engagement with an inside thread (24) on the holder (22).

2. An insert according to claim 1, in which the sealing ring (82) is arranged for conical seat engagement with the opposite sealing ring (84).

3. An insert according to claim 1 or 2, in which the sealing ring (82) is made of metal, particularly steel.

4. An insert according to any one of the foregoing claims, in which an outer end of the socket (52) has a recess (58) situated at a circumference for a tool for fastening and releasing the connection (54, 24).

5. A holder (22) from which an insert (50), configured for a post-treatment unit (10) for exhaust gases according to any one of the foregoing claims, is arranged to be pushed into and pulled out, wherein said holder (22) comprising said opposite sealing ring (84) and said inside thread (24) for engagement with the outside thread (54) on the socket (52), and wherein said opposite sealing ring (84) is arranged for cooperation in self-centering seat engagement and to cooperate by substantially linear contact with the sealing ring (82) on the socket (52).

6. A holder according to claim 5, in which the opposite sealing ring (84) is made of metal, particularly steel.

7. A holder according to any one of claims 5-6, in which the opposite sealing ring (84) is located in a corner recess of the holder (22).

8. A post-treatment unit (10) for exhaust gases provided with an insert (50) and/or holder (22) according to any one of the foregoing claims.

## Patentansprüche

1. Einsatz (50) für einen Halter (22) in einer Nachbehandlungseinheit (10) für Abgase eines Verbrennungsmotors, umfassend eine Buchse (52) für eine Behandlungskomponente (70), die dazu vorgesehen ist, dass zu behandelnde Abgase durch sie hindurchfließen, Verbindungsmittel (54) zum Halten des Einsatzes (50) in Position in dem Halter (22) und Dichtungsmittel (80) für ein gasdichtes Verschließen der Buchse (52) relativ zu dem Halter (22), **dadurch gekennzeichnet, dass** die Dichtungsmittel (80) einen Dichtungsring (82) an der Buchse (52) zum Zusammenwirken in Kontakt in selbstzentrierendem Sitz mit einem gegenüberliegenden Dichtungsring (84) in dem Halter (22) umfassen, wobei der Dichtungsring (82) in einer Eckenvertiefung der Buchse (52) angeordnet ist und durch einen im Wesentlichen linearen Kontakt mit dem gegenüberliegenden Dichtungsring (84) in dem Halter (22) zusammenwirkt, und dadurch, dass die Verbindungsmittel eine Schraubverbindung (24, 54) umfassen, die ein Außengewinde (54) an der Buchse (52) für einen Eingriff in ein Innengewinde (24) an dem Halter (22) umfasst.

2. Einsatz gemäß Anspruch 1, in welchem der Dichtungsring (82) für einen Kontakt in konischem Sitz mit dem gegenüberliegenden Dichtungsrichtung (84) eingerichtet ist.

3. Einsatz gemäß Anspruch 1 oder 2, bei welchem der Dichtungsring (82) aus Metall gefertigt ist, insbesondere aus Stahl.

4. Einsatz gemäß einem der vorhergehenden Ansprüche, bei welchem ein äußeres Ende der Buchse (52) eine an einem Umfang angeordnete Vertiefung (58) für ein Werkzeug zum Festziehen und Lösen der Verbindung (54, 24) aufweist.

5. Halter (22), wobei ein Einsatz (5), der für eine Nachbehandlungseinheit (10) für Abgase eines Verbrennungsmotors gemäß einem der vorhergehenden Ansprüche eingerichtet ist, dazu eingerichtet ist, in den Halter (22) hineingedrückt und aus diesem herausgezogen zu werden, wobei der Halter (22) den gegenüberliegenden Dichtungsring (84) und das Innengewinde (24) zum Eingriff in das Außengewinde (54) an der Buchse (52) umfasst, und wobei der gegenüberliegende Dichtungsring (84) zum Zusammenwirken in Kontakt in selbstzentrierendem Sitz und zum Zusammenwirken durch einen im Wesentlichen linearen Kontakt mit dem Dichtungsring (82) an der Buchse (52) eingerichtet ist.

6. Halter gemäß Anspruch 5, bei welchem der gegenüberliegende Dichtungsring (84) aus Metall gefertigt ist, insbesondere aus Stahl.

7. Halter gemäß einem der Ansprüche 5 bis 6, bei welchem der gegenüberliegende Dichtungsring (84) in einer Eckvertiefung des Halters (22) angeordnet ist.

8. Nachbehandlungseinheit (10) für Abgase, die mit einem Einsatz (50) und/oder mit einem Halter (22) gemäß einem der vorhergehenden Ansprüche versehen ist.

## Revendications

1. Insert (50) pour un support (22) dans une unité de post-traitement (10) de gaz d'échappement d'un moteur à combustion, comprenant un élément creux (52) pour un composant de traitement (70) dans lequel sont destinés à s'écouler les gaz d'échappement qui doivent être traités, des moyens de raccordement (54) pour maintenir l'insert (50) en position dans le support (22), et des moyens d'étanchéité (80) pour une fermeture étanche aux gaz entre l'élément creux (52) et le support (22), **caractérisé en ce que** lesdits moyens d'étanchéité (80) comprennent une bague d'étanchéité (82) sur l'élément creux (52) pour coopérer avec une bague d'étanchéité opposée (84) dans le support (22) en s'engageant avec la bague d'étanchéité opposée (84) par contact à centrage automatique, la bague d'étanchéité (82) est située dans un renfoncement d'angle de l'élément creux (52) et coopère avec la bague d'étanchéité opposée (84) dans le support (22) par contact essentiellement linéaire, et **en ce que** les moyens de raccordement comprennent un raccord (24, 54) fileté comprenant un filetage extérieur (54) sur l'élément creux (52) pour venir en prise avec un filetage intérieur (24) sur le support (22).

2. Insert selon la revendication 1, dans lequel la bague d'étanchéité (82) est conçue pour s'engager avec la bague d'étanchéité opposée (84) par un appui conique.

3. Insert selon la revendication 1 ou 2, dans lequel la bague d'étanchéité (82) formé de métal, en particulier d'acier.

4. Insert selon l'une quelconque des revendications précédentes, dans lequel une extrémité extérieure de l'élément creux (52) a un évidement (58) situé à une circonférence, pour un outil servant au serrage et desserrage du raccord (54, 24).

5. Support (22) dans lequel et hors duquel un insert (50), configuré pour une unité de post-traitement (10) de gaz d'échappement, selon l'une quelconque des revendications ci-dessus, est conçu pour être inséré et extrait, ledit support (22) comprenant ladite bague d'étanchéité opposée (84) et ledit filetage intérieur (24) pour venir en prise avec le filetage extérieur (54) sur l'élément creux (52), et dans lequel ladite bague d'étanchéité opposée (84) est conçue pour coopérer avec la bague d'étanchéité (82) sur l'élément creux (52) en s'engageant avec la bague d'étanchéité (82) par contact à centrage automatique et pour coopérer avec la bague d'étanchéité (82) sur l'élément creux (52) par contact essentiellement linéaire.

6. Support selon la revendication 5, dans lequel la bague d'étanchéité opposée (84) est formé de métal, en particulier d'acier.

7. Support selon l'une quelconque des revendications 5 à 6, dans lequel la bague d'étanchéité opposée (84) est située dans un renfoncement d'angle du support (22).

8. Unité de post-traitement (10) de gaz d'échappement pourvue d'un insert (50) et/ou d'un support (22) selon l'une quelconque des revendications ci-dessus.
